# EUROPEAN PATENT APPLICATION

(11) **EP 2 508 447 A1**
(43) Date of publication of application: **10.10.2012**
(21) Application number: 11161743.7
(22) Date of filing: 08.04.2011
(51) Int. Cl.: B65D 83/46, B65D 83/20, B67D 1/04, B65D 83/40

(54) **Self-dispensing container**

(71) Applicant: Crown Packaging Technology, Inc., Alsip, IL 60803-2599 (US)
(72) Inventor: The designation of the inventor has not yet been filed
(74) Representative: Smith, Debra Jane Clare

(57) **Abstract**

A self-dispensing container of carbonated product comprising a hollow body (10) having a filling aperture, a carbonated product inserted into the hollow body (10) via the filling aperture, leaving a headspace, and a lid (20) adapted to seal the filling aperture after insertion of the carbonated product wherein, after sealing, the headspace fills with CO₂ from the carbonated product to equalise the pressure within the container. The container further includes a valve (30) having open and closed positions, wherein the valve (30) communicates between a valve inlet (35) on the inside of the container and a dispensing orifice 60 on the outside of the container, and in use the container is orientated so that the valve inlet 35 is submerged in the carbonated product and when the valve is in its open position, the CO₂ in the headspace dispenses the carbonated product through the dispensing orifice (60).

## Description

### Technical Field

The present invention relates to a container of pressurised product, in which a gas is mixed into the product and is gradually released from the product into the headspace in order to achieve a state of equilibrium within the container.

Preferably, the container is a conventional thin-walled beverage can and the pressurised product is a carbonated beverage e.g. a fizzy drink containing CO₂. Such thin-walled beverage cans are mass-produced at high speeds of about 800-1500 cans per minute and are rated at about 95 psi (0.655 MPa). After filling the can body (which is open at one end), the open end of the can body is sealed with an end using conventional techniques e.g. a double seam where the can body and end are made from metal.

### Summary of invention

Accordingly, the present invention provides a self-dispensing container of carbonated product comprising a hollow body having a filling aperture, a carbonated product inserted into the hollow body via the filling aperture leaving a headspace, and a lid adapted to seal the filling aperture after insertion of the carbonated product, and after sealing, the headspace fills with CO₂ from the carbonated product to equalise the pressure within the container, characterised in that
the container further includes a valve having open and closed positions, wherein the valve communicates between a valve inlet on the inside of the container and a dispensing orifice on the outside of the container, and in use the container is orientated so that the valve inlet is submerged in the carbonated product and when the valve is in its open position, the CO₂ in the headspace dispenses the carbonated product through the dispensing orifice.

In the container according to the invention, a valve is provided. During filling, the valve is closed. After filling with carbonated product, the container is sealed with a lid. CO₂ in the product comes out of solution filling the headspace (the volume of the container not filled with product) with CO₂ gas to equalise the pressure within the sealed container.

A user then orientates the container so that the valve inlet is submerged in the carbonated product. Thereafter, the valve is opened and the product is self-dispensed from the container using the internal pressure therein to drive the product through the valve. More specifically, the pressure of the gas in the headspace drives dispensing of the product through the open valve. Upon re-closing, the internal pressure in the container will again reach equilibrium, causing more CO₂ to come out of solution from the product and replenish the headspace with CO₂.

Thus, the dispensing pressure used to drive the product through the valve comes from the CO₂ progressively released from the product into the headspace every time the valve is closed and the container sealed. For this reason, the inventors have suggested using the highest carbonation level in the product, which is typically above that conventionally used.

Therefore, considering the case where the container is a conventional thin-walled beverage can, the carbonation level of the product upon filling is preferably 3 - 4 vols (volumes of CO₂ dissolved per volume of product), to ensure that substantially all the product may be dispensed at temperatures ranging from 2 - 35 °C. If the carbonation level is over 4 vols and the temperature is high, the inventors have found that the beverage can may fail due to "base reverse or end peak". The fact that the can remains pressurised has the further advantage that the thin-walled beverage can remains stiff and the sidewall supported for the entire time that the carbonated product is being dispensed, thereby reducing the risk of damage during use. Thereafter, the beverage can may be vented and crushed, as is the case for a conventional beverage can.

The inventors predict that the worst case dispensing condition is at low temperature, after most of the product has been dispensed. In this case, the final in-can pressure will be less than 5 psi (0.034 MPa), but it is still a positive pressure and all the contents will be ejected. Thus, as a user dispenses product from the beverage can the dispensing pressure will drop. For example, from 50 psi (0.344 MPa) for a "full", warm beverage can to a low pressure as the beverage can empties.

Furthermore, the headspace left in the beverage can after initial filling is important to the operation of the invention. Preferably the fill volume as a percentage of capacity of the beverage can is in the range of 70-90% (e.g. 85% or 440ml in a 500ml can).

In the beverage can according to the invention, the dispensed product differs from a conventional carbonated ("fizzy") beverage because during dispensing through the valve, the product shears and gas is released turning the dispensed product into carbonated foam.

Nowadays, because of environmental concerns and the pressure to reduce packaging, there is also increasing interest in concentrated products. Such concentrated products contain less water, take up less space and therefore require less packaging. However, the difficulty arising from the use of concentrated products is that it is more difficult to dispense the correct quantity of product prior to dilution. An advantage of using the carbonated dispenser according to the invention is that upon dispensing, the product becomes larger due to the entrapped gases in the dispensed foam, making it easier for a user the see the quantity of product dispensed.

### Brief description of drawings

The invention will now be described by way of example only, with reference to the accompanying graphs and drawings, in which;

Figure 1 is a graph showing the drop in the gauge pressure predicted in a can according to the invention, as a user consumes the carbonated product in 20 ml swallows.

Figure 2 is a graph showing the drop in carbonation level of a filled can according to the invention, as a user consumes the carbonated product in 20 ml swallows.

Figure 3 comprises an isometric view (fig. 3a) and a section (fig 3b) taken through a first embodiment of a can according to the invention in its covered and sealed position;

Figure 4 comprises an isometric view (fig. 4a) and a section (fig 4b) taken through the can shown in figure 3 in its uncovered position but with the valve in its sealed position;

Figure 5 comprises an isometric view (fig. 5a) and a section (fig 5b) taken through the can shown in figures 3 and 4 in its uncovered position and with the valve tilted to its open position;

Figure 6 comprises an isometric view (fig. 6a) and a section (fig 6b) taken through a second embodiment of a can according to the invention in its covered and sealed position;

Figure 7 comprises an isometric view (fig. 7a) and a section (fig 7b) taken through the can shown in figure 6, in its covered and sealed position, but with the tab raised;

Figure 8 comprises an isometric view (fig. 8a) and a section (fig 8b) taken through the can shown in figures 6 and 7, in its covered and sealed position, but with the spout extended.

Figure 9 comprises an isometric view (fig. 9a) and a section (fig 9b) taken through the can shown in figures 6 and 7, with the spout extended as shown in figure 8, in its uncovered position and with the valve tilted to its open position;

Figure 10 comprises an isometric view (fig. 10a) and a section (fig 10b) taken through a third embodiment of a can according to the invention in its covered and sealed position, with the valve located on the bottom of the can;

Figure 11 comprises an isometric view (fig. 11 a) and a section (fig 11 b) taken through the third embodiment can shown in figure 10 with the cover removed and the valve tilted to its open position.

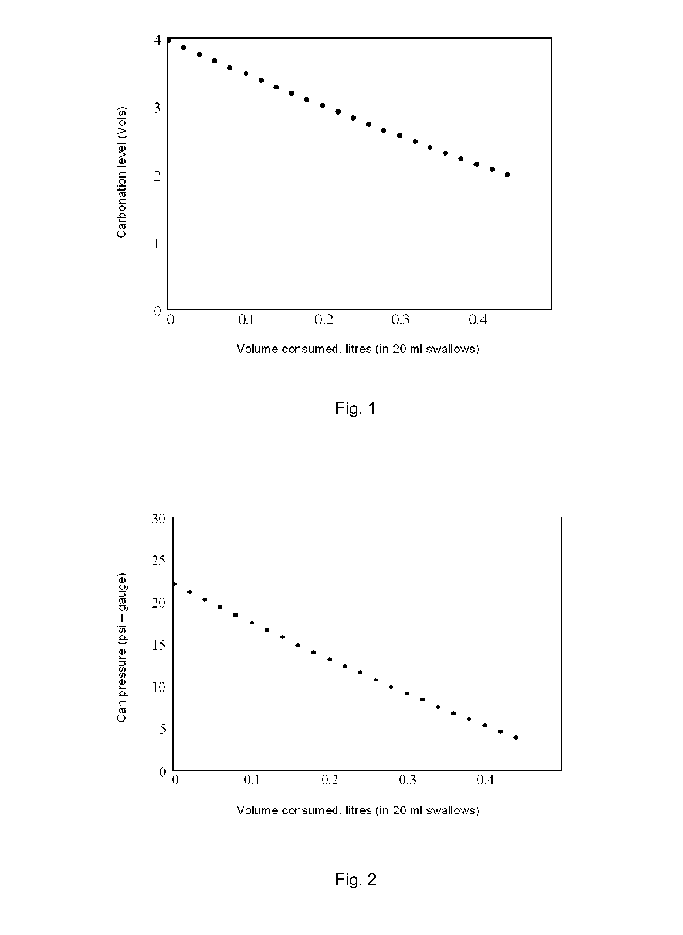

The graphs shown in Figures 1 and 2 were generated from computer models assuming modelling conditions of 2°C, initial carbonation level of carbonated product of 4 vols with no nitrogen. The inventors found that adding nitrogen to the headspace of the can was less efficient than increasing the carbonation level in the product, because the CO₂ level in the headspace can replenish itself from the carbonated product, whereas nitrogen added to the headspace can only be a fixed quantity, whose effect gradually lessens as the product is consumed and the volume of the headspace increases.

Preferably, the can according to the invention is filled with product having 4 vols carbonation. The inventors have found that this ensures that the carbonated product will fully dispense even at low temperatures and that the can will stay rigid throughout drinking. The can according to the invention provides a different drinking experience, because the product foams before reaching the mouth and appears smoother to the consumer.

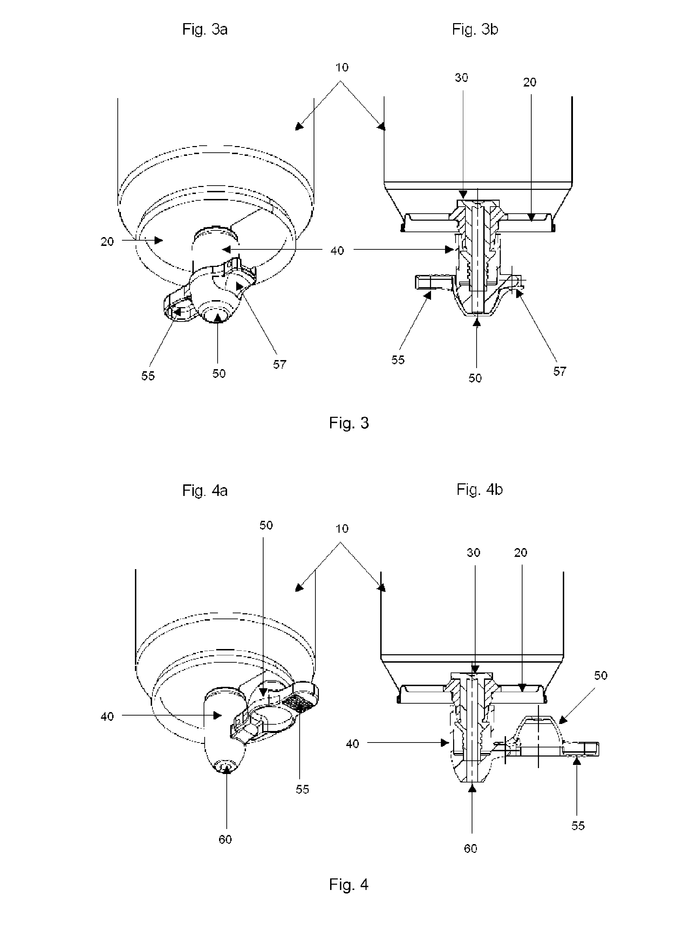

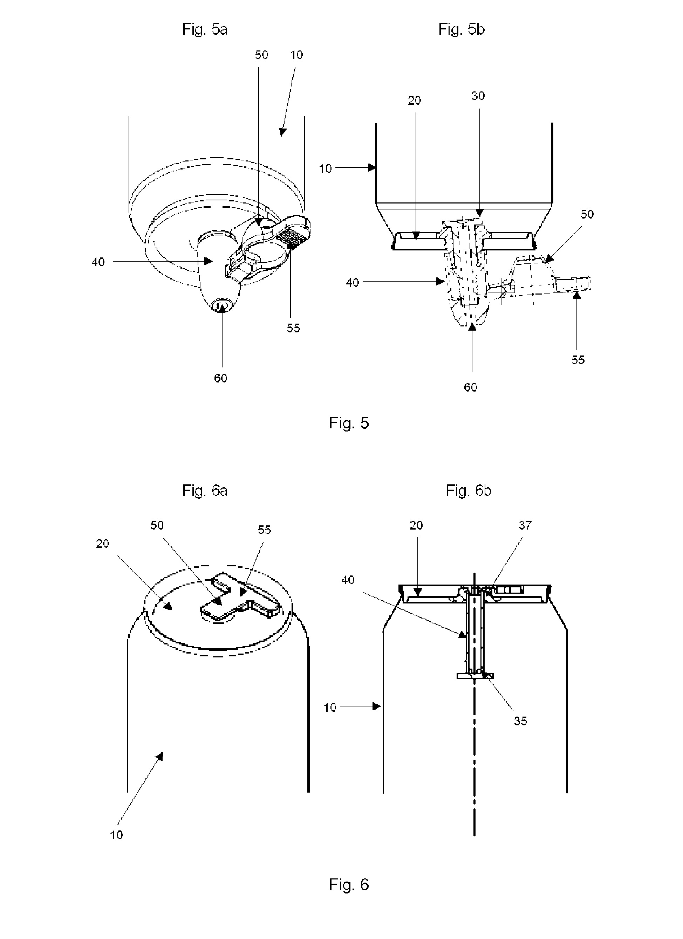

Referring to figures 3 to 5, in a first embodiment of the invention the container comprises a body 10 and a top 20. A spout 40 having a valve 30 is accommodated in the top 20. The spout 40 has a dispensing orifice 60, which is closed by a lid 50. The lid 50 has a finger tab 55 and a thumb rest 57. To open the container, a user may flick the finger tab open whilst resting a thumb (or adjacent finger) on the thumb rest 57. Although opened, the container remains sealed by of the valve 30. To dispense the product from the container, a user simply inverts the container (so that the inlet to the valve 30 is submerged in product) and then opens the valve by tilting it (as shown in figure 5) so that the valve plate (not referenced) is lifted off the valve seat 37, creating a dispensing pathway through the valve. As the valve is tilted, the internal pressure in the container drives the product through the valve.

Care must be taken when handling filled cans according to the first embodiment of the invention to ensure that the protruding spout does not foul on equipment or adjacent cans. Furthermore, due to the projection of the spout beyond the "envelope" occupied by the can, display of the filled cans may require increased shelf space. The cans are likely to be protected with an overcap, which prevents accidental activation and also allows stacking in pallets.

Preferably the filled and sealed cans have a "flat" top, which does not protrude outside the "envelope" of the filled can. This simplifies distribution and storage of the filled cans. Figures 6 to 9 show a second embodiment of the invention, in which the beverage can has a substantially planar or "flat" top, when closed and sealed.

Referring to figure 6, a can according to the invention has a conventional beverage can body 10 to which is seamed an end 20 having a valve 30 and a spout 40, which initially extends towards the inside of the container. Due to this revised configuration, the valve inlet 35 and valve seat 37 (which are now spaced further apart when the spout and valve are closed) can be more clearly seen in figure 6b. As shown in Figure 6, the lid 50 and tab 55 are substantially "flat" and lie within the "envelope of the can".

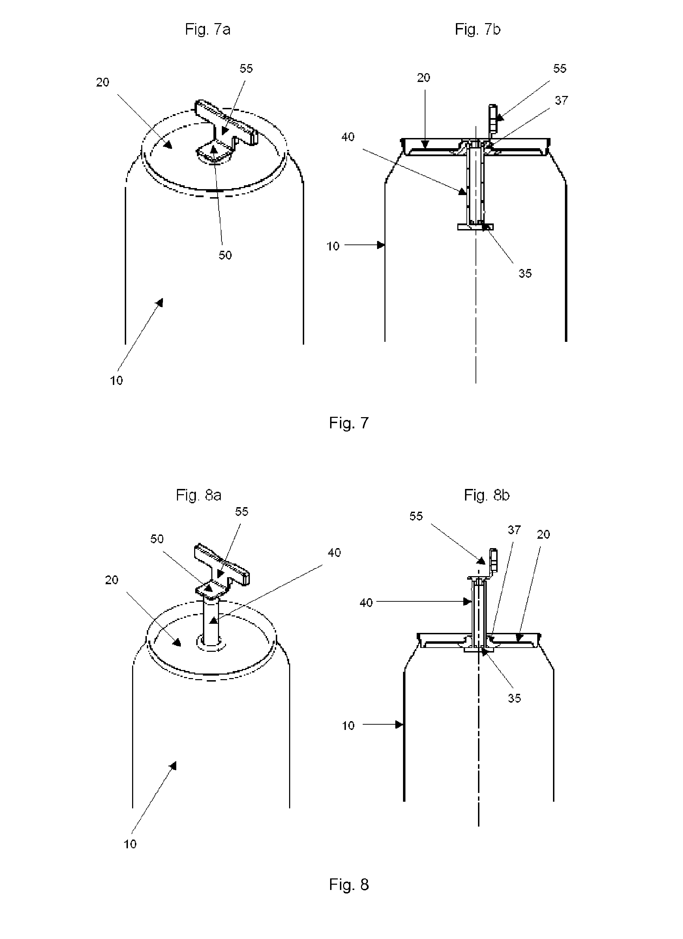

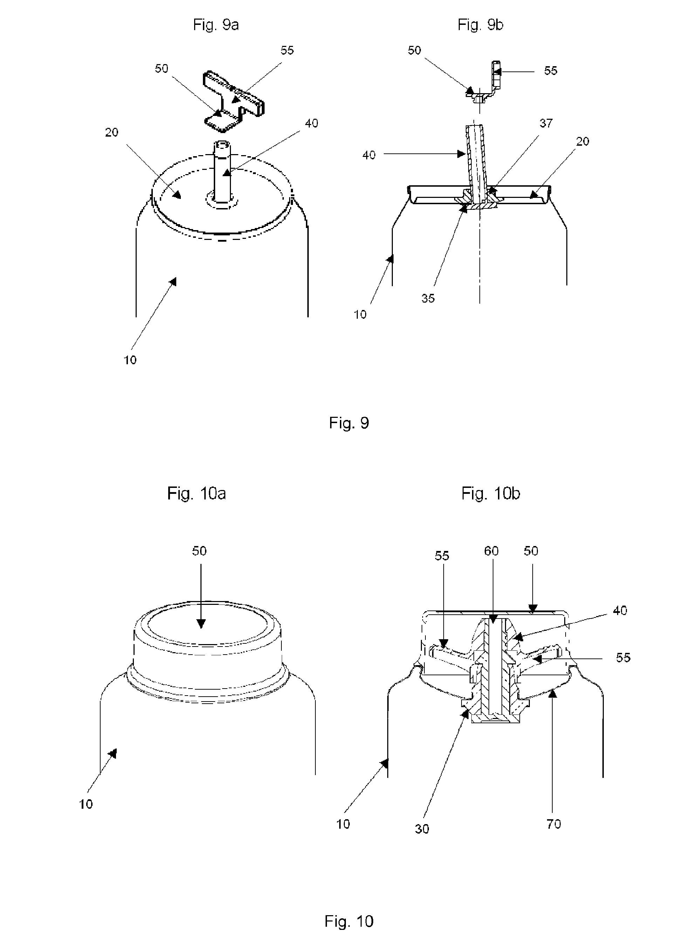

Upon opening a user first lifts the tab 55 (as shown in figure 7) and then uses the tab 55 to pull the spout 40 out of the container body 10, so that it projects outside the plane of the end 20 (as shown in figure 8). At this stage the spout 40 is still closed by the lid 50 and the valve 30 is closed, thereby sealing the container. Finally the user may remove the lid 50 to expose the dispensing orifice through the spout 40 (as shown in figure 9a). The user may then open the valve by tilting it (as shown in figure 9b) and as described and shown in relation to figure 5.

Conventional beverage can bodies are manufactured at high speed having an open end through, which they can be filled. Once filled, an end is seamed onto the open end of the can body to seal the product therein. Conventionally, multiple ends are supplied to the seaming machine in "stacks". A problem with the modified ends according to the first and second embodiments of the invention is that the spout 40 lies outside the plane of the end. In the first embodiment of the invention this problem may be mitigated by incorporating the valve on the end prior to seaming and then assembling the applicator (nozzle / overcap etc.) after seaming. The disadvantages of this are increased stack height, slower seaming speed and the need for a secondary process to attach the applicator after seaming. To overcome these problems, the inventor's have also looked at citing the valve 30 elsewhere on the beverage can, within the container "envelope".

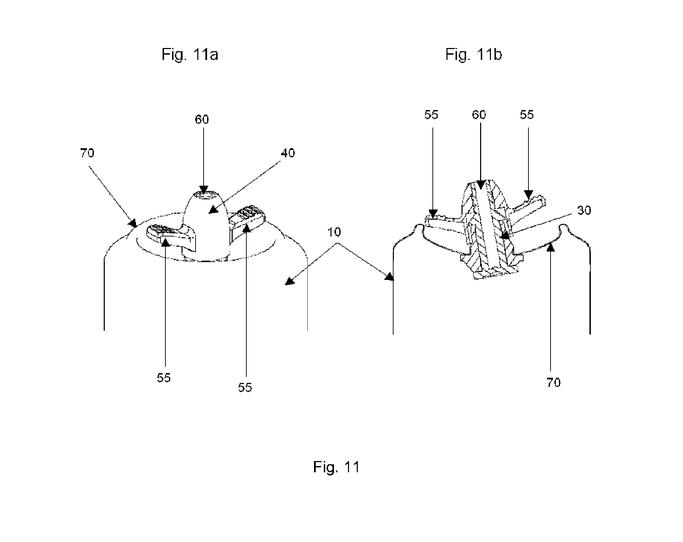

Figures 10 and 11 show a third embodiment of the invention where the valve is cited on the bottom 70 of a conventional beverage can body 10. Manufacture of this arrangement requires a single operation to pierce the bottom 70 of the can and draw the cut edge outwards to create a retention barb. Figure 10 illustrates the valve 30 covered by the lid 50 (as previously described) and Fig 11 illustrates the same arrangement with the lid 50 in its open position exposing the dispensing orifice 60 and the valve 30 tilted to dispense the carbonated product.

Although the examples discussed above show a simple tilt valve, it will be apparent to people skilled in the art that the valve may take many alternative forms such as a tilt valve, a push valve with return spring, a bite valve or a demand valve etc.

### Reference signs list

10 - Body
20 - Top
30 - Valve
35 - Valve inlet
37 - Valve seat
40 - Spout
50 - Lid
55 - Tab
57 - Thumb Rest
60 - Dispensing Orifice
70 - Bottom

## Claims

1. A self-dispensing container of carbonated product comprising
- a hollow body (10) having a filling aperture
- a carbonated product inserted into the hollow body (10) via the filling aperture, leaving a headspace, and
- a top (20) adapted to seal the filling aperture after insertion of the carbonated product, and
after sealing, the headspace fills with CO₂ from the carbonated product to equalise the pressure within the container
**characterised in that**
the container further includes a valve (30) having open and closed positions, wherein the valve (30) communicates between a valve inlet (35) on the inside of the container and a dispensing orifice (60) on the outside of the container, and in use the valve inlet (35) is submerged in the carbonated product and when the valve (30) is in its open position, the CO₂ in the headspace dispenses the carbonated product through the dispensing orifice (60).

2. A self-dispensing container of carbonated product according to claim 1,
wherein the valve (30) is located in the top (20).

3. A self-dispensing container of carbonated product according to claims 1 or 2, wherein the top (20) is made from a conventional beverage end shell having a pressure performance of less than 105 psi.

4. A self-dispensing container of carbonated product according to claim 1,
wherein the valve (30) is located on the bottom (70) of the hollow body (10).

5. A self-dispensing container of carbonated product according to any of the preceding claims, wherein the dispensing orifice (60) lies substantially flat against or recessed into the outside surface of the container.

6. A self-dispensing container of carbonated product according to claim 5,
wherein the valve (30) is connected to a spout (40) adapted to be extended upon opening.

7. A self-dispensing container of carbonated product according to any of the preceding claims, **characterised in that** the valve (30) is a tilt valve and a user tilts the valve to expose one or more small holes forming the valve inlet (35) to open the valve (30) and dispense the carbonated product.

8. A self-dispensing container of carbonated product according to any of the preceding claims, wherein the product contains 3-4 vols of carbon dioxide to ensure that the carbon dioxide is able to dispense the product from the container in a series of doses.

9. A self-dispensing container of carbonated product according to any of the preceding claims, wherein the CO₂ is able to dispense the product from the can at temperatures between 2 °C and 35 °C.

10. A self-dispensing container of carbonated product according to any of the preceding claims, wherein the internal volume of the container is filled to 70-90% of its capacity and the unfilled space defines the headspace.

11. A self-dispensing container of carbonated product according to any of the preceding claims, wherein the carbonated product is a fizzy drink.

12. A self-dispensing container of carbonated product according to any of the preceding claims, wherein a dip tube is connected to the valve inlet (35) and allows use without inverting the beverage container.

13. A self-dispensing container of carbonated product according to any of the preceding claims, wherein the container is a thin walled beverage container, having a hollow body (10) with at least one open end and the top (20) is a conventional beverage end adapted to seal the open end of the body after filling.

14. A self-dispensing container of carbonated product according to claim 13,
wherein the thin walled beverage container is made of metal and the end is joined to the open end of the hollow body (10) using conventional seaming techniques.

15. A self-dispensing container of carbonated product according to claims 13 or 14, wherein the thin walled beverage container body has a pressure performance of less than 105 psi.
